# EUROPÄISCHE PATENTSCHRIFT

(11) **EP 1 816 229 B1**
(45) Veröffentlichungstag und Bekanntmachung des Hinweises auf die Patenterteilung: **24.03.2010**
(21) Anmeldenummer: 06001999.9
(22) Anmeldetag: 31.01.2006
(51) Int. Cl.: C23C 4/12

(54) **Thermisches Spritzverfahren und Vorrichtung zum Durchführen des Verfahrens**
Thermal spraying device and method
Dispositif et procédé de pulvériation thermique

(43) Veröffentlichungstag der Anmeldung: 08.08.2007
(73) Patentinhaber: SIEMENS AKTIENGESELLSCHAFT, 80333 München (DE)
(72) Erfinder: Bergander, Katharina, 13503 Berlin (DE); Berndt, Thomas, 12524 Berlin (DE); Ladru, Francis-Jurjen Dr., 14050 Berlin (DE)

(56) Entgegenhaltungen:
- EP-A- 0 489 328
- EP-A- 0 795 620
- EP-A- 1 350 862
- EP-B- 1 159 085
- WO-A-02/070772
- WO-A-2004/005575
- FR-A- 2 106 780
- US-A- 3 537 425
- US-A- 4 576 828
- US-A1- 2002 153 117
- "ADVERTISEMENT" ADVANCED MATERIALS & PROCESSES, AMERICA SOCIETY FOR METALS. METALS PARK, OHIO, US, Bd. 143, Nr. 1, Januar 1993 (1993-01), Seiten 23-24, XP000304296 ISSN: 0882-7958

## Beschreibung

Die vorliegende Erfindung betrifft Spritzverfahren, insbesondere thermische Spritzverfahren wie etwa Flammenspritzverfahren, zum Beschichten der Oberfläche eines Werkstückes. Daneben betrifft die Erfindung eine Vorrichtung zum Durchführen eines Spritzverfahrens an einem Werkstück.

Beschichtete Werkstücke gehören heutzutage in einem weiten Feld von Anwendungen zum Stand der Technik. Beispielsweise werden bestimmte Gasturbinenbauteile, etwa Lauf- oder Leitschaufeln der Turbine oder des Verdichters oder Hitzeschildelemente der Brennkammer, mittels geeigneter Beschichtungen vor Korrosion und Oxidation geschützt werden. Daneben kommen Beschichtungen zur Anwendung, welche die Wärmeleitung von der Oberfläche in das Bauteilvolumen verringern.

Zum Aufbringen der Beschichtungen kommen verschiedene Verfahren in Frage. Neben einer Abscheidung aus der Gasphase finden insbesondere Spritzverfahren Anwendung, in denen Beschichtungsmaterial in Pulverform auf die zu beschichtende Oberfläche gespritzt wird. Beim Spritzen schmelzen die verspritzten Pulverpartikel zumindest teilweise auf und bilden nach dem Wiedererstarren auf der Oberfläche die Beschichtung. Dabei dient eine Spritzdüse zum Verspritzen des Pulvers. Mittels der Spritzdüse wird ein Hochgeschwindigkeitsgasstrahl in Richtung auf die zu beschichtende Bauteiloberfläche gerichtet, in den die Pulverpartikel eingebracht werden. Der Hochgeschwindigkeitsgasstrahl beschleunigt die Pulverpartikel dann in Richtung auf die Oberfläche. Das Aufschmelzen der Pulverpartikel erfolgt entweder bereits im Gasstrahl, wenn dessen Temperatur ein bestimmtes Niveau übersteigt, oder bei kalten Gasstrahlen beim Auftreffen auf die Oberfläche.

Während des Spritzens der Beschichtung findet eine Rotation des zu beschichtenden Bauteils statt, um ein gleichmäßiges Beschichten aller Oberflächenbereiche des Bauteils zu ermöglichen.

Wenn der Gasstrahl in verschiedenen Oberflächenbereichen während der Rotation unter verschiedenen Auftreffwinkeln auftrifft, kann trotz der Rotation eine inhomogene Beschichtung entstehen. Die Spritzdüse ist daher in der Regel beweglich ausgeordnet, um ihre Position zum Bauteil verändern zu können.

Die WO 2004/005575 A2 offenbart ein Spritzverfahren zum Beschichten der Oberfläche eines Werkstückes und eine Vorrichtung zum Durchführen des Spritzverfahrens, indem das Spritzen aus einer Spritzrichtung erfolgt und das Werkstück während des Spritzprozesses um eine Rotationsachse rotiert, wobei die Spritzrichtung in einem Winkel zur Rotationsachse verläuft und der Kippwinkel von dem Werkstück eingestellt werden kann.

Aufgabe der vorliegenden Erfindung ist es, ein Verfahren und eine Vorrichtung zum Spritzen zur Verfügung zu stellen, welches beziehungsweise welche im Bezug auf die herzustellende Beschichtung vorteilhaft ist.

Im erfindungsgemäßen Spritzverfahren zum Beschichten der Oberfläche eines Werkstückes erfolgt ein Spritzen aus einer Spritzrichtung, während das Werkstück um eine Rotationsachse rotiert. Auf diese Weise werden während jeder Umdrehung alle Bereiche einer die Rotationsachse umgebenden Umfangsfläche einmal der Spritzrichtung zugewandt. Im erfindungsgemäßen Verfahren verläuft die Spritzrichtung in einem Winkel zur Rotationsachse, wobei der Winkel grundsätzlich zwischen 0° und 180° liegen kann. Während des Spritzprozesses wird der Winkel variiert, wobei wenigstens ein Teil der Variation durch Verschwenken der Rotationsachse erfolgt.

Das erfindungsgemäße Verfahren fußt auf der Erkenntnis, dass das Spritzen in der Regel in einer speziell dafür hergerichteten Beschichtungskammer erfolgt, in welchem die Spritzdüse an einem Roboterarm beweglich angeordnet ist. Die Beweglichkeit der Spritzdüse soll sicherstellen, dass alle Oberflächenbereiche des rotierenden Werkstückes aus einer geeigneten Richtung bespritzt werden können. An die Spritzdüse schließen sich weitere Elemente an, beispielsweise eine Reaktionskammer, die im Falle einer Flammenspritzanlage eine Brennkammer zum Erhitzen eines Gas-Brennstoff-Gemisches ist, sowie Zufuhrleitungen zum Zuführen des bzw. der für das Erzeugen des Hochgeschwindigkeitsgasstrahles nötigen Fluide sowie des zu verspritzenden Pulvers.

Die in der Spritzdüse mündende Spritzeinrichtung weist eine bestimmte Mindestbaulänge auf, welche die Bewegungsfreiheit in der Beschichtungskammer einschränken kann. Zudem schränken häufig auch die notwendigen Zuleitungen sowie der Platzbedarf des Roboterarms zum Ausführen der Bewegungen die Bewegungsfreiheit in der Beschichtungskammer ein. Zwar lassen sich die geschilderten Probleme grundsätzlich durch Vergrößern der Beschichtungskammer und/oder Verlängern der Zuleitungen beheben, jedoch ist damit insgesamt ein höherer Platzbedarf für die Vorrichtung erforderlich.

Die Beschichtungskammer dient insbesondere dazu, ein abgeschlossenes Volumen zur Verfügung zu stellen, aus dem beim Spritzprozess Pulverstaub problemlos abgesaugt werden kann, sowie zur Schallisolierung während des Spritzens. Eine Vergrößerung der Beschichtungskammer ist dabei vor allem im Hinblick auf das Absaugvermögen nicht immer ohne weiteres möglich.

Mit dem erfindungsgemäßen Verfahren kann ein Mangel an Einstellmöglichkeiten des Winkels zwischen der Spritzrichtung und der Rotationsachse des Bauteils anstatt durch Vergrößern des Bewegungsspielraumes des Roboterarms durch die zusätzliche Verschwenkbarkeit der Rotationsachse des Bauteils kompensiert werden. Insgesamt lässt sich so auch in einer relativ kleinen Beschichtungskammer eine hohe Variationsbreite der Richtungen, aus denen das Material auf die Oberfläche gespritzt werden kann erreichen. Der Platzbedarf einer Vorrichtung zum Durchführen des Verfahrens kann daher in Grenzen gehalten werden.

Insbesondere kann das Verfahren auch derart ausgestaltet sein, dass die Variation des Winkels zwischen der Spritzrichtung und der Rotationsachse alleine durch Verschwenken der Rotationsachse erfolgt. In diesem Fall kann die Spritzdüse sogar fix in der Beschichtungskammer angeordnet sein. Vorzugsweise erfolgt das Variieren des Winkels zwischen der Spritzrichtung und der Rotationsachse jedoch durch ein Verschwenken der Rotationsachse in Verbindung mit einem Verändern der Spritzrichtung. Dadurch kann auch bei relativ geringer Beweglichkeit der Rotationsachse und bei relativ geringem Platzangebot eine hinreichende Einstellmöglichkeit des Winkels zwischen der Spritzrichtung und der Rotationsachse erfolgen. Eine Verschwenkbarkeit der Rotationsachse im Bereich zwischen 0 und 30° ist für die meisten Anwendungen ausreichend.

Die Rotationsachse verläuft im erfindungsgemäßen Verfahren vorzugsweise durch das Werkstück, sodass Abstandsvariationen zwischen der Werkstückoberfläche und der Spritzdüse während der Rotation möglichst gering gehalten werden können. Die Spritzrichtung verläuft dann vorzugsweise in oder in der Nähe einer Ebene, in welcher die Rotationsachse verläuft, sodass die Spritzdüse immer auf die Bauteiloberfläche gerichtet ist.

Das erfindungsgemäße Spritzverfahren kann insbesondere als thermisches Spritzverfahren, beispielsweise als Flammenspritzverfahren, ausgestaltet sein. Es eignet sich insbesondere zum Aufbringen einer metallischen Haftvermittlerschicht auf ein Turbinenbauteil, beispielsweise eine Lauf- oder Leitschaufel einer Turbine, oder auf ein Element einer Brennkammerauskleidung.

Eine erfindungsgemäße Vorrichtung zum Durchführen eines Spritzverfahrens wie es zuvor beschrieben worden ist umfasst einen um eine Rotationsachse drehbar angeordneten Werkstückhalter und eine in eine Spritzrichtung spritzende Spritzdüse. Die Spritzdüse ist derart angeordnet oder anzuordnen, dass die Rotationsachse und die Spritzdüse in einem Winkel zueinander stehen, wobei grundsätzlich Winkel zwischen 0° und 180° möglich sind. Die Spritzdüse ist außerdem so relativ zur Rotationsachse angeordnet, dass während jeder Umdrehung alle Bereiche einer die Rotationsachse umgebenden Umfangsfläche einmal der Spritzrichtung zugewandt werden. Zudem umfasst die erfindungsgemäße Vorrichtung eine Schwenkeinrichtung zum Verschwenken der Rotationsachse des Werkstückhalters. Mittels der Schwenkeinrichtung kann zusätzliche Freiheit beim Einstellen des Winkels zwischen der Spritzrichtung und der Rotationsachse erzielt werden, wie dies mit Bezug auf das erfindungsgemäße Verfahren beschrieben worden ist. Dies ist insbesondere vorteilhaft, wenn die Vorrichtung in einer relativ kleinen Beschichtungskammer angeordnet ist.

Vorzugsweise verläuft die Rotationsachse durch den Werkstückhalter, sodass das Werkstück derart montiert werden kann, dass die Rotationsachse durch das Werkstück selbst verläuft.

Zwar kann die Vorrichtung derart ausgebildet sein, dass alleine die Rotationsachse des Werkstückes verschwenkt werden kann, vorzugsweise ist jedoch auch eine Variation der Spritzrichtung möglich, d.h. die Spritzdüse ist beweglich angeordnet. Dies kann beispielsweise durch die Anordnung der Spritzdüse an einem Roboterarm realisiert werden.

Für viele Anwendungen ist es ausreichend, wenn die Schwenkeinrichtung ein Verschwenken der Rotationsachse um Winkel im Bereich zwischen 0° und 30° ermöglicht. Als Richtungen, in die die Spritzdüse gerichtet werden kann, eignen sich insbesondere Richtungen, welche in einer durch die Rotationsachse verlaufenden Ebene liegen.

Insbesondere kann die erfindungsgemäße Vorrichtung als Flammenspritzvorrichtung, also eine Vorrichtung zum Durchführen eines Flammenspritzverfahrens, ausgestaltet sein. Weiterhin kann die erfindungsgemäße Vorrichtung derart ausgestaltet sein, dass sich die Spritzdüse zum Verspritzen eines sog. MCrAlX-Materials eignet und der Werkstückhalter zum Halten eines Turbinenbauteils als Werkstück ausgebildet ist. Die Turbinenbauteile können hierbei etwa Leit- oder Laufschaufeln von Gasturbinen oder Hitzeschildelemente von Brennkammern sein.

Weitere Merkmale, Eigenschaften und Vorteile ergeben sich aus der nachfolgenden Beschreibung eines Ausführungsbeispiels unter Bezugnahme auf die beiliegenden Figuren.
- Fig. 1: zeigt beispielhaft eine Gasturbine in einem Längsteilschnitt.
- Fig. 2: zeigt in perspektivischer Ansicht eine Laufschaufel oder Leitschaufel einer Strömungsmaschine.
- Fig. 3: zeigt eine Brennkammer einer Gasturbine.
- Fig. 4: zeigt eine Vorrichtung zum Durchführen eines Spritzverfahrens mit einem Werkstück in einer ersten Schwenkstellung.
- Fig. 5: zeigt die Vorrichtung aus Fig. 1 mit dem Werkstück in einer zweiten Schwenkstellung.

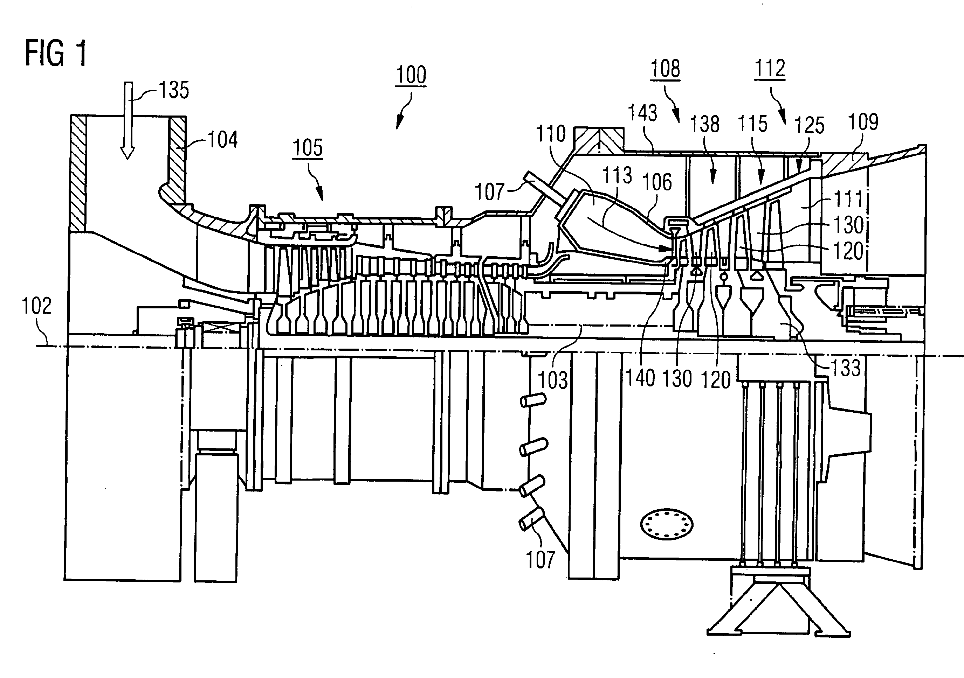

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

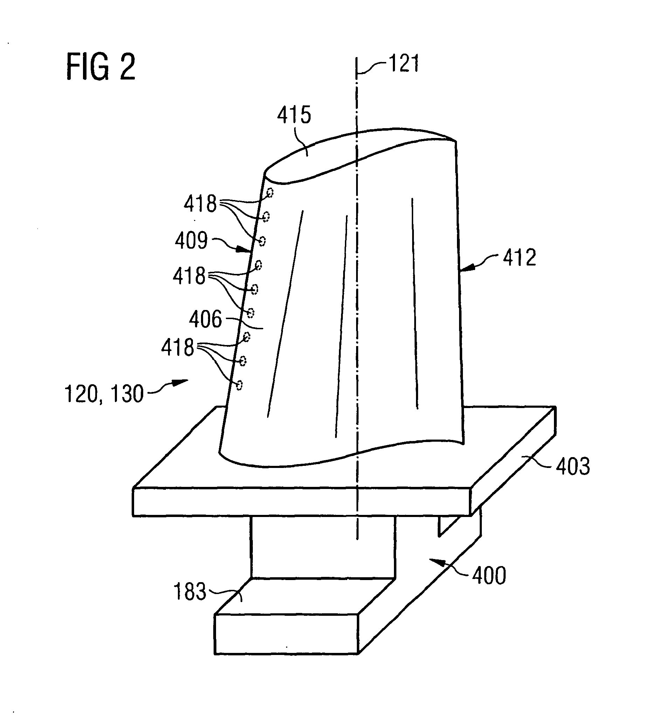

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

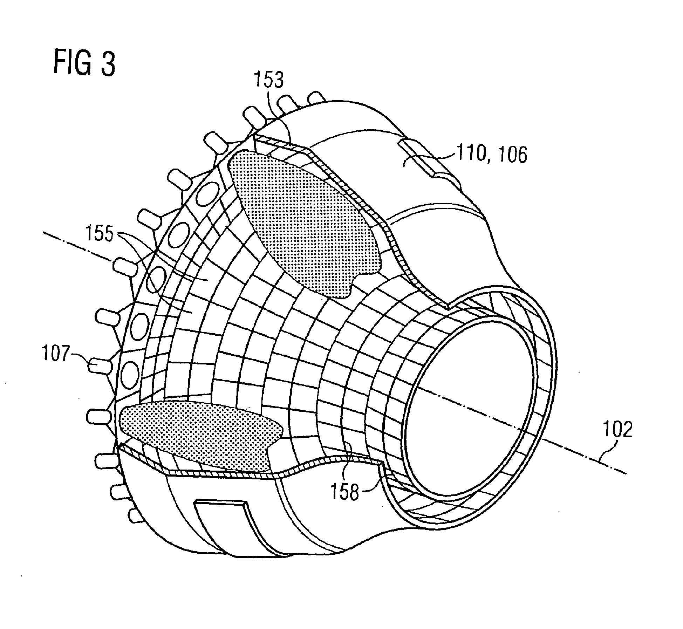

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrA1X und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu ist zwischen der Brennkammerwand 153 und den Hitzeschildelementen 155 eine Anzahl von Temperatursensoren 158 positioniert.

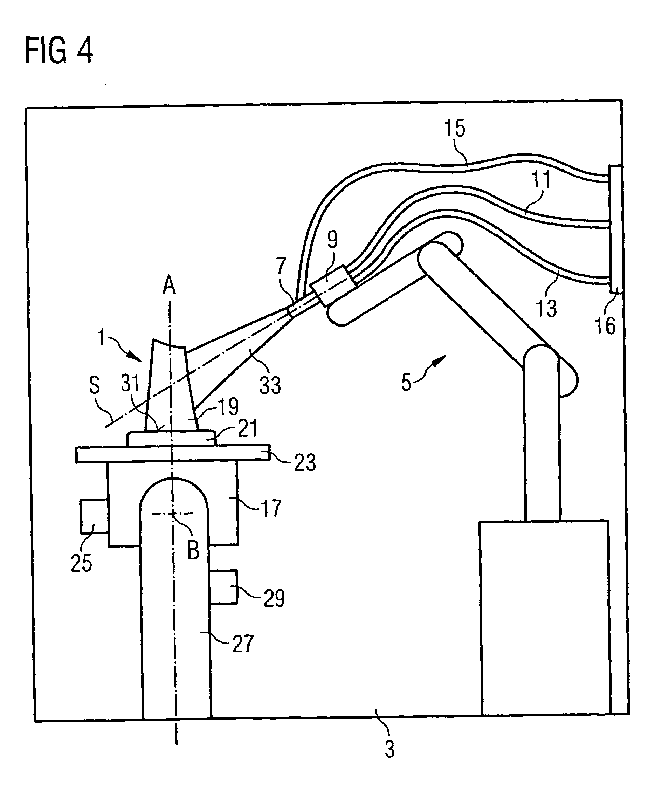

Fig. 4 zeigt eine Vorrichtung zum Durchführen eines erfindungsgemäßen Spritzverfahrens an einer Turbinenschaufel 1 als Werkstück. Die Vorrichtung ist in einer Beschichtungskammer 3 angeordnet, welche während des Spritzvorgangs geschlossen ist, sodass sie ein abgeschlossenes Volumen bildet, aus der Spritzpulverstaub abgesaugt werden kann. In der Kammer 3 ist ein Roboterarm 5 angeordnet, an dessen äußerem Ende eine Spritzdüse 7 befestigt ist, mittels der ein Beschichtungsmaterial auf die Turbinenschaufel 1 gespritzt werden kann. Der Roboterarm 5 kann grundsätzlich jede für Roboterarme geläufige Ausgestaltung aufweisen. Besonders geeignet sind jedoch Skararoboter, d.h. Roboter mit drei parallelen Rotationsachsen und einer Linearachse, und 6-Achs-Roboter mit sechs Rotationsachsen. Derartige Roboterarme bieten eine gute Beweglichkeit und ermöglichen so eine große Freiheit beim Orientieren der Spritzdüse 7.

An die Spritzdüse 7 schließt sich ein Brennraum 9 an, in welchem ein Sauerstoff-Brennstoff-Gemisch verbrannt wird. Der Sauerstoff und ein Brennstoff werden über zwei flexible Zuleitungen 11 bzw. 13 dem Brennraum 9 zugeführt. Eine weitere flexible Zuleitung 15 ermöglicht das Zuführen eines Pulvers des Beschichtungsmaterials in den Abgasstrom der Verbrennung im Bereich der Spritzdüse 7. Die flexiblen Zuleitungen 11, 13 und 15 münden in einer Durchführung 16, welche das Zuführen des Sauerstoffes, des Brennstoffes und des Pulvers von der Außenseite der Beschichtungskammer 3 ermöglichen.

Die Turbinenschaufel 1 umfasst ein Schaufelblatt 19, eine Schaufelplattform 21 und einen in der Darstellung nicht zu erkennenden Schaufelfuß. Sie wird während des Spritzprozesses von einem Werkstückhalter 17 gehalten. Im vorliegenden Ausführungsbeispiel ist dieser derart ausgestaltet, dass der nicht zu beschichtende Schaufelfuß im Wesentlichen im Inneren des Werkstückhalters 17 angeordnet ist, während das Schaufelblatt 19 und die Schaufelplattform 21 aus dem Werkstückhalter 17 herausragen und beschichtet werden können. Es sei an dieser Stelle darauf hingewiesen, dass der Werkstückhalter 17 an das zu haltende Werkstück angepasst ist und anders ausgestaltet sein kann, insbesondere dann, wenn das zu beschichtende Werkstück keine Turbinenschaufel, sondern beispielsweise ein Hitzeschildelement für eine Brennkammer ist.

Der Werkstückhalter 17 weist einen um eine Achse A drehbar gelagerten Halterabschnitt 23 auf, an welchem das Werkstück, also im vorliegenden Ausführungsbeispiel die Turbinenschaufel 1, fixiert ist. Mittels eines Motors 25 lässt sich das Werkstück 1 um die Achse A drehen.

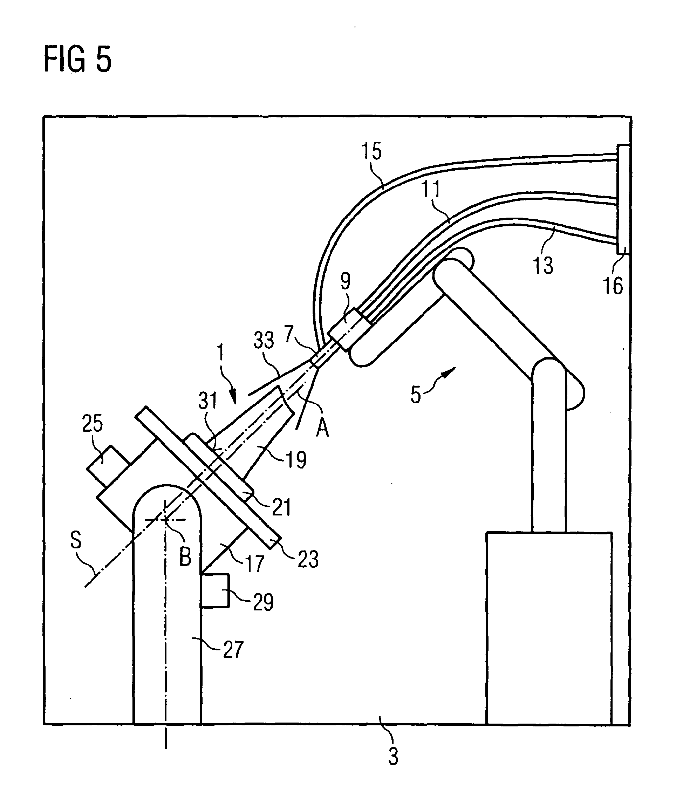

Der Werkstückhalter 17 ist auf einem säulenförmigen Gestell 27 um eine Schwenkachse B verschwenkbar gelagert. Die Schwenkachse B verläuft senkrecht zur Rotationsachse A und schneidet diese. Mittels eines Antriebs und eines Motors 29 lässt sich die gesamte Halterung 17 - und damit die Turbinenschaufel 1 - um die Schwenkachse B verschwenken. Fig. 4 zeigt den Werkstückhalter 17 in einer ersten, neutralen Schwenkstellung, wohingegen Fig. 5 den Werkstückhalter 17 in einer zum Roboterarm 5 hin verschwenkten zweiten Schwenkstellung zeigt.

Als Getriebe für den Antrieb kommen grundsätzlich alle Arten von Getrieben in Betracht. Insbesondere können formschlüssige Getriebe, wie etwa Zahnradgetriebe oder Schneckengetriebe, oder kraftschlüssige Getriebe, wie etwa Wälzkörpergetriebe, zur Anwendung kommen. Im vorliegenden Ausführungsbeispiel findet ein Schneckengetriebe Anwendung, da dieses selbsthemmend ist und so einer selbständigen Vorstellung der Halterung 17 entgegenwirkt.

Das Spritzverfahren dient im vorliegenden Ausführungsbeispiel zum Aufbringen einer metallischen Haftvermittlerschicht, bspw. einer MCrA1X-Schicht, auf die Turbinenschaufel 1. Diese wird direkt auf den Basiswerkstoff der Turbinenschaufel 1 aufgespritzt.

Als Spritzverfahren kommt im vorliegenden Ausführungsbeispiel ein thermisches Spritzverfahren zur Anwendung, nämlich das sog. Hochgeschwindigkeits-Flammenspritzen (HVOF). In einem Hochgeschwindigkeits-Flammenspritzverfahren erfolgt ein Verbrennen eines Sauerstoff-Brennstoff-Gemisches. Die Verbrennung des Sauerstoff-Brennstoff-Gemisches führt zu einer Expansion der heißen Verbrennungsabgase und dadurch zu einem Ausströmen durch die Düse 7 mit hoher Geschwindigkeit. Über eine weitere flexible Zuleitung 15 wird das Material der aufzubringenden Beschichtung in Form eines Pulvers in den Abgasstrahl der Verbrennung eingespeist. Das Pulver wird vom Abgasstrahl mitgerissen und bei geeigneter Ausrichtung der Düse 7 in Richtung auf die Oberfläche der Turbinenschaufel 1 beschleunigt. Aufgrund der hohen Temperaturen schmelzen die Pulverpartikel zumindest teilweise auf und verbinden sich nach dem Auftreffen auf die zu beschichtende Oberfläche der Turbinenschaufel 1 zu einer Beschichtung.

Während des Spritzens des Beschichtungsmaterials auf die Oberfläche des Schaufelblattes 19 und der Schaufelfußes 21 rotiert die Turbinenschaufel 1 um die Rotationsachse A. Das Rotieren der Turbinenschaufel 1 während des Spritzens erlaubt das Beschichten der gesamten Turbinenschaufel 1 von einer Seite aus, da aufgrund der Rotation alle Umfangsbereiche der Schaufel dieser Seite zugewandt werden. Der Roboterarm 5 ermöglicht dabei, die Spritzdüse 7 in eine für das Aufbringen der Beschichtung auf die Turbinenschaufel 1 günstige Position zu bringen. Die Bewegungsfreiheit des Roboterarms 5 ist dabei jedoch einerseits aufgrund des in der Beschichtungskammer 3 zur Verfügung stehenden Raumes und andererseits durch die Länge der flexiblen Zuleitungen 11 bis 15 beschränkt. Es kann deshalb schwierig sein, für jeden zu beschichtenden Oberflächenbereich der Turbinenschaufel 1 eine zum homogenen Beschichten optimale Spritzposition der Spritzdüse 7 einzustellen. Beispielsweise kann es aufgrund des eingeschränkten Bewegungsbereiches des die Spritzdüse 7 tragenden Roboterarmes 5 schwierig sein, eine Spritzrichtung einzustellen, die einen hinreichend kleinen Winkel mit der Oberflächennormalen des Oberflächenabschnittes 31 der Schaufelplattform 21 aufweist. Als die Spritzrichtung soll hierbei die Mittellinie des Materialkegels 33 aus verspritztem Spritzpulver angesehen werden. Ein zu großer Winkel zwischen der Normalen des Oberflächenbereiches 31, deren Richtung im vorliegenden Ausführungsbeispiel mit der Richtung der Rotationsachse A zusammenfällt, und der Spritzrichtung S erschwert das Aufbringen einer hinreichend dicken Beschichtung auf diesem Oberflächenabschnitt in einer hinreichend kurzen Zeit.

Um eine bessere Positionierung der Turbinenschaufel 1 relativ zur Spritzdüse 7 zu ermöglichen, wird der Werkstückhalter 17 im vorliegenden Ausführungsbeispiel zur Spritzdüse 7 hin verschwenkt. Dadurch kann der Winkel zwischen der Oberflächennormalen des Abschnitts 31 der Schaufelplattform 21 und der Spritzrichtung S auch bei lediglich geringem Bewegungsradius der Spritzdüse 7 vorteilhaft eingestellt werden, d.h. so eingestellt werden, dass eine hinreichend dicke und homogene Beschichtung auf dem Oberflächenabschnitt 31 innerhalb einer akzeptablen Zeitspanne erzeugt werden kann. Diese Schwenkstellung ist in Fig. 5 dargestellt. Je nach zu beschichtendem Oberflächenbereich kann auch ein Verschwenken von der Spritzdüse 7 weg, also in der Figur nach links, erfolgen. Dies kann beispielsweise bei Leitschaufeln sinnvoll sein, die an beiden Enden des Schaufelblattes Schaufelplattformen besitzen.

Während des gesamten Spritzverfahrens ist die Spritzrichtung S so eingestellt, dass sie die Rotationsachse A schneidet oder diese innerhalb der Turbinenschaufel 1 passiert. Mit anderen Worten, die Spritzrichtung S und die Rotationsachse A liegen zumindest näherungsweise in einer gemeinsamen Ebene. Die Spritzdüse 7 ist auf diese Weise immer auf die Turbinenschaufel 1 gerichtet.

Im vorliegenden Ausführungsbeispiel wurde ein Flammenspritzverfahren beschrieben. Die Erfindung kann jedoch auch mit anderen Spritzverfahren, beispielsweise Kaltgas-Spritzverfahren oder anderen thermischen Spritzverfahren realisiert werden.

Aufgrund der Verschwenkbarkeit des Werkstückhalters 17, und damit des gehaltenen Werkstückes 1, kann in der erfindungsgemäßen Vorrichtung der Spielraum beim Einstellen der Spritzrichtung S relativ zu den zu beschichtenden Oberflächen des Werkstückes erhöht werden. Dies ermöglicht das Herstellen gleichmäßigerer Beschichtungen in kürzere Zeit.

## Patentansprüche

1. Spritzverfahren zum Beschichten der Oberfläche eines Werkstückes (1),
in dem das Spritzen aus einer Spritzrichtung (S) erfolgt und das Werkstück (1) während des Spritzprozesses um eine Rotationsachse (A) rotiert, wobei:
- die Spritzrichtung (S) in einem eine Winkel zur Rotationsachse (A) verläuft,
- der Winkel während des Spritzprozesses variiert wird,
- wenigstens ein Teil der Variation durch Verschwenken der Rotationsachse (A) erfolgt und
in dem die Rotationsachse (A) im Bereich zwischen 0° und 30° verschwenkt wird.

2. Spritzverfahren nach Anspruch 1,
in dem das Variieren des Winkels zwischen der Spritzrichtung (S) und der Rotationsachse (A) durch ein Verschwenken der Rotationsachse (A) in Verbindung mit einer Variation der Spritzrichtung (S) erfolgt.

3. Spritzverfahren nach Anspruch 1 bis 2,
in dem die Rotationsachse (A) durch das Werkstück (1) verläuft.

4. Spritzverfahren nach Anspruch 3,
in dem sich die Spritzrichtung (S) in oder in der Nähe einer Ebene, in der die Rotationsachse (A) verläuft, erstreckt.

5. Spritzverfahren nach einem der Ansprüche 1 bis 4,
welches als Hochgeschwindigkeits-Flammspritzen (HVOF) ausgestaltet ist.

6. Spritzverfahren nach einem der Ansprüche 1 bis 5,
in welchem eine metallische Haftvermittlerschicht auf ein Turbinenbauteil (1) gespritzt wird.

7. Vorrichtung zum Durchführen eines Spritzverfahrens an einem Werkstück (1), welche umfasst:
- einen um eine Rotationsachse (A) drehbar angeordneten Werkstückhalter (17),
- eine in eine Spritzrichtung (S) spritzende Spritzdüse (7), wobei die Spritzdüse (7) derart angeordnet oder anzuordnen ist, dass die Rotationsachse (A) und die Spritzdüse (7) in einem Winkel zueinander stehen und dass während jeder Umdrehung alle Bereiche einer die Rotationsachse (A) umgebenden Umfangsfläche einmal der Spritzrichtung (S) zugewandt werden,
- eine Schwenkeinrichtung (29) zum Verschwenken der Rotationsachse (A) des Werkstückhalters (17) und
in dem der Schwenkwinkelbereich, in dem die Schwenkeinrichtung (29) die Rotationsachse (A) verschwenken kann, Winkel zwischen 0 und 30° umfasst.

8. Vorrichtung nach Anspruch 7,
bei dem die Spritzdüse (7) derart beweglich ist, dass eine Variation der Spritzrichtung (S) erfolgen kann.

9. Vorrichtung nach einem der Ansprüche 7 bis 8,
in der die Rotationsachse (A) durch den Werkstückhalter (17) verläuft.

10. Vorrichtung nach Anspruche 9,
in der sich die Spritzrichtung (S) in oder in der Nähe einer Ebene, in der die Rotationsachse (A) verläuft, erstreckt.

11. Vorrichtung nach einem der Ansprüche 7 bis 10,
die als Flammspritzvorrichtung ausgestaltet ist.

12. Vorrichtung nach einem der Ansprüche 7 bis 11,
in dem die Spritzdüse (7) zum Verspritzen eines MCrAlX-Materials und der Werkstückhalter (17) zum Halten eines Turbinenbauteils (1) als Werkstück ausgebildet ist.

## Claims

1. Spraying method for coating the surface of a workpiece (1), in which spraying takes place from a spraying direction (S) and the workpiece (1) rotates about an axis of rotation (A) during the spraying process:
- the spraying direction (S) running at an angle with respect to the axis of rotation (A),
- the angle being varied during the spraying process,
- at least part of the variation taking place as a result of the pivoting of the axis of rotation (A), and
in which the axis of rotation (A) is pivoted in the range between 0° and 30°.

2. Spraying method according to Claim 1, in which the variation in the angle between the spraying direction (S) and the axis of rotation (A) takes place by means of a pivoting of the axis of rotation (A) in conjunction with a variation in the spraying direction (S).

3. Spraying method according to Claims 1 and 2, in which the axis of rotation (A) runs through the workpiece (1).

4. Spraying method according to Claim 3, in which the spraying direction (S) extends in or in the vicinity of a plane in which the axis of rotation (A) runs.

5. Spraying method according to one of Claims 1 to 4, which is configured as high-velocity flame spraying (HVOF).

6. Spraying method according to one of Claims 1 to 5, in which a metallic adhesion promoter layer is sprayed onto a turbine component (1).

7. Device for carrying out a spraying method on a workpiece (1), which comprises:
- a workpiece holder (17) arranged so as to be rotatable about an axis of rotation (A),
- a spray nozzle (7) spraying in a spraying direction (S), the spray nozzle (7) being arranged or having to be arranged in such a way that the axis of rotation (A) and the spray nozzle (7) are at an angle to one another and that, during each revolution, all the regions of a circumferential surface surrounding the axis of rotation (A) face the spraying direction (S) once,
- a pivoting arrangement (29) for pivoting the axis of rotation (A) of the workpiece holder (17), and in which the pivot angle range in which the pivoting device (29) can pivot the axis of rotation (A) comprises angles between 0° and 30°.

8. Device according to Claim 7, in which the spray nozzle (7) is movable in such a way that a variation in the spraying direction (S) can take place.

9. Device according to one of Claims 7 and 8, in which the axis of rotation (A) runs through the workpiece holder (17).

10. Device according to Claim 9, in which the spraying direction (S) extends in or in the vicinity of a plane in which the axis of rotation (A) runs.

11. Device according to one of Claims 7 to 10, which is configured as a flame-spraying device.

12. Device according to one of Claims 7 to 11, in which the spray nozzle (7) is designed for spraying an MCrAIX material and the workpiece holder (17) is designed for holding a turbine component (1) as the workpiece.

## Revendications

1. Procédé de pulvérisation pour revêtir la surface d'une pièce ( 1 ),
dans lequel la pulvérisation s'effectue dans une direction ( S ) de pulvérisation et la pièce ( 1 ) tourne autour d'un axe ( A ) de rotation pendant le processus de pulvérisation, dans lequel :
- la direction ( S ) de pulvérisation fait un angle avec l'axe ( A ) de rotation,
- l'angle varie pendant le processus de pulvérisation,
- au moins une partie de la variation s'effectue en faisant pivoter l'axe ( A ) de rotation, et
dans lequel l'axe ( A ) de rotation pivote dans la plage comprise entre 0° et 30°.

2. Procédé de pulvérisation suivant la revendication 1,
dans lequel la variation de l'angle entre la direction ( S ) de pulvérisation et l'axe ( A ) de rotation s'effectue par un pivotement de l'axe ( A ) de rotation en liaison avec une variation de la direction ( S ) de pulvérisation.

3. Procédé de pulvérisation suivant les revendications 1 à 2,
dans lequel l'axe ( A ) de rotation traverse la pièce ( 1 ).

4. Procédé de pulvérisation suivant la revendication 3,
dans lequel la direction ( S ) de pulvérisation s'étend dans un plan ou à proximité d'un plan, dans lequel s'étend l'axe ( A ) de rotation.

5. Procédé de pulvérisation suivant l'une des revendications 1 à 4,
qui est conformé en métallisation à la flamme à grande vitesse ( HVOF ).

6. Procédé de pulvérisation suivant l'une des revendications 1 à 5,
dans lequel on pulvérise une couche métallique favorisant l'adhérence sur un élément ( 1 ) de turbine.

7. Dispositif pour la mise en oeuvre d'un procédé de pulvérisation sur une pièce ( 1 ), qui comprend :
- un porte-pièce ( 17 ) monté tournant autour d'un axe ( A ) de rotation,
- une buse ( 7 ) de pulvérisation pulvérisant dans une direction ( S ) de pulvérisation, la buse ( 7 ) de pulvérisation étant disposée ou mise de façon à ce que l'axe ( A ) de rotation et la buse ( 7 ) de pulvérisation fassent un angle entre eux et en ce que, pendant chaque rotation, toutes les parties d'une surface périphérique entourant l'axe ( A ) de rotation soient tournées une fois dans la direction ( S ) du pulvérisation,
- un dispositif ( 29 ) de pivotement, pour faire pivoter l'axe ( A ) de rotation du porte-pièce ( 17 ) et
dans lequel la plage angulaire de pivotement, dans lequel le dispositif ( 29 ) de pivotement peut faire pivoter l'axe ( A ) de rotation, est comprise entre 0° et 30°.

8. Dispositif suivant la revendication 7,
la buse ( 7 ) de pulvérisation est mobile, de façon à pouvoir effectuer une modification de la direction ( S ) du pulvérisation.

9. Dispositif suivant l'une des revendications 7 à 8,
dans lequel l'axe ( A ) de rotation traverse le porte-pièce ( 17 ).

10. Dispositif suivant la revendication 9,
dans lequel la direction ( S ) de pulvérisation s'étend dans un plan ou à proximité d'un plan, dans lequel s'étend l'axe ( A ) de rotation.

11. Dispositif suivant l'une des revendications 7 à 10,
qui est conformé en dispositif de métallisation à la flamme.

12. dispositif suivant l'une des revendications 7 à 11,
dans lequel la buse ( 7 ) de pulvérisation est constituée pour la pulvérisation d'un matériau MCrAlX, et le porte-pièce ( 17 ) pour porter un élément ( 1 ) de turbine en tant que pièce.
